# EUROPEAN PATENT SPECIFICATION

(11) **EP 2 107 554 B1**
(45) Date of publication and mention of the grant of the patent: **10.08.2011**
(21) Application number: 08006690.5
(22) Date of filing: 01.04.2008
(51) Int. Cl.: G10L 15/06, G10L 15/00

(54) **Generation of multilingual codebooks for speech recognition**
Erzeugung von mehrsprachigen Codebüchern zur Spracherkennung
Génération de tables de codage plurilingues pour la reconnaissance de la parole

(43) Date of publication of application: 07.10.2009
(73) Proprietor: Harman Becker Automotive Systems GmbH, 76307 Karlsbad (DE)
(72) Inventor: Brueckner, Raymond, 89134 Blaustein (DE); Raab, Martin, 89081 Ulm (DE); Gruhn, Rainer, 89079 Ulm (DE)
(74) Representative: Grünecker, Kinkeldey, Stockmair & Schwanhäusser Anwaltssozietät

(56) References cited:
- US-B1- 6 212 500
- KAUKORANTA T ET AL: "A new iterative algorithm for VQ codebook generation" IMAGE PROCESSING, 1998. ICIP 98. PROCEEDINGS. 1998 INTERNATIONAL CONFE RENCE ON CHICAGO, IL, USA 4-7 OCT. 1998, LOS ALAMITOS, CA, USA,IEEE COMPUT. SOC, US, vol. 2, 4 October 1998 (1998-10-04), pages 589-593, XP010308476 ISBN: 978-0-8186-8821-8

## Description

### Field of Invention

The present invention relates to the art of speech recognition and, in particular, to speech recognition of speech inputs of different languages based on codebooks.

### Background of the invention

Speech recognition systems, i.e. devices for converting an acoustic signal to a sequence of words or strings, become increasingly prevalent nowadays. In the last years due to significant improvement in speech recognition technology, high performance speech analyzing, recognition algorithms and speech dialog systems have been made available. Speech recognition and speech synthesis are of growing importance in many kinds of man-machine interaction situations. Speech dialog systems are useful for a most natural kind of interaction between an operator and some operation device. Present day speech input capabilities comprise voice dialing, call routing, document preparation, etc. A speech dialog system can, e.g., be employed in a car to allow the user to control different devices such as a mobile phone, a car radio, a navigation system and/or an air condition. Speech operated media player represent another recent example for the application of speech recognition means.

During speech recognition verbal utterances, either isolated words or continuous speech, are captured by a microphone or a telephone, for example, and converted to analogue electronic signals that subsequently are digitalized. The digital signals are usually subject to a subsequent spectral analysis. Recent representations of the speech waveforms sampled typically at a rate between 6.6 kHz and 20 kHz are derived from the short term power spectra and represent a sequence of characterizing vectors containing values of what is generally referred to as features/feature parameters. The values of the feature parameters are used in succeeding stages in the estimation of the probability that the portion of the analyzed waveform corresponds to, for example, a particular entry, i.e. a word, in a vocabulary list.

Speech recognition systems usually make use of a concatenation of allophones that constitute a linguistic word. The allophones are typically represented by Hidden Markov Models (HMM) that are characterized by a sequence of states each of which has a well-defined transition probability. In order to recognize a spoken word, the systems have to compute the most likely sequence of states through the HMM. This calculation is usually performed by means of the Viterbi algorithm, which iteratively determines the most likely path through the associated trellis.

The reliability of the correct speech recognition of a verbal utterance of an operator is a main task in the art of speech recognition/operation and despite recent progress still raises demanding problems, in particular, in the context of embedded systems that suffer from severe memory and processor limitations. These problems are eminently considerable when speech inputs of different languages are to be expected. A driver of car, say a German mother-tongue driver, might need to input an expression, e.g., representing a town, in a foreign language, say in English.

US 6 212 500 B1 discloses a method for determining similarities of sounds across different languages wherein the first feature vector for first spoken sound in a first language and a second feature vector for a second spoken sound comparable to the first spoken sound in a second language are identified and first and second hidden Markov sound models are selected to form a polyphoneme model by combining the standard probability distributions employed in the first and second hidden Markov sound models in order to form a new standard probability distribution. Densities of sound segments that are similar over various languages are compiled to form a multilingual codebook.

Present day speech recognition and control means usually comprise codebooks that are usually generated by the (generalized) Linde-Buzo-Gray (LBG) algorithm or related algorithms. Use of codebook for speech recognition is, e.g., described in US 6,003,003. However, such kind of codebook generation aims to find a limited number of (Gaussian) prototype code vectors in the feature space covering the entire training data which usually comprises data of one single language.

Alternatively, data from a number of languages of interest can be used by means of one particular codebook for each of the languages without any preference for one particular language. This, results in a huge amount of data and heavy processing load. In typical applications, however, not all of a number of pre-selected languages are of the same all-day importance. Thus, there is a need for efficient speech recognition of speech inputs of different languages that, in particular, is acceptable in terms of the demand for computer resources. In particular, there is a need for an improved method for generating a codebook for multilingual speech recognition.

### Description of the Invention

The above-mentioned problem is solved by providing a codebook for speech recognition generated by the inventive method according to claim 1. The method for generating a multilingual codebook comprises the steps of providing a (first) main language codebook for a main language and at least one additional codebook corresponding to a (second) language different from the main language. The main language is the language in which most utterances that are to be recognized based on the codebook are spoken. Both the main language codebook and the at least one additional codebook may be provided by generating the respective codebook, e.g., by means of the LBG algorithm.

From the main language codebook and the at least one additional codebook a multilingual codebook is generated by (iteratively) adding a sub-set of the code vectors of the at least one additional codebook to the main codebook based on distances between the code vectors of the at least one additional codebook to code vectors of the main language codebook.

The distances between code vectors, e.g., of all code vectors, of the at least one additional codebook to code vectors of the main language codebook are determined and at least one code vector of the at least one additional codebook is added to the main language codebook that exhibits a predetermined distance from the closest neighbor of the main language codebook, i.e. the code vector of the main language codebook that is closest to this at least one code vector.

The predetermined distance can be the largest distance of the distances of the code vectors of the at least one additional codebook to the respective closest neighbors of the main language codebook. In particular, code vectors can be iteratively be added to the main language codebook in order to generate the multilingual codebook. It may be preferred that the distances of the code vectors of the at least one additional codebook to the respective closest neighbors of the main language codebook are determined and then the one code vector of the at least one additional codebook with the largest distance is added to the main language codebook. Subsequently, again the distances of the code vectors of the at least one additional codebook to the respective closest neighbors of the main language codebook are determined and then the one code vector of the at least one additional codebook with the largest distance is added to the main language codebook and so on repeatedly.

Thereby, the multilingual codebook can be generated very efficiently. This iterative generation can advantageously be finished when it is determined that none of the remaining code vectors of the at least one additional codebook exhibits a distance to the closest neighbor of the main language codebook above a predetermined minimum distance threshold. This threshold can be determined beforehand to be the threshold below which no significant improvement of the recognition result is to be expected, i.e. addition of code vectors with such small distances does not result in better recognition reliability. The number of code vectors of the multilingual codebook can, thus, be kept as small as possible for a targeted recognition performance.

The codebooks may comprise Gaussians as vectors, i.e. a Gaussian density distribution of feature vectors generated for each language by some technique as known in the art. The distance can be determined by means of the Mahalanobis distance or the Kullback-Leibler divergence or by minimizing the gain in variance when a particular additional code vector is merged with different particular code vectors of the main language codebook, i.e. when the respective (merging) code vectors are replaced by a code vector that would have been estimated from the training samples of both the main language codebook and the additional codebook that resulted in the code vectors that are merged. It is noted that based on experiments performed by the inventors the Mahalanobis distance has been proven to be very suitable. However, depending on different languages and employed samples of code vectors other distance measures can be an equally appropriate choice.

According to the disclosed method a multilingual codebook can be generated that is suitable for automated (machine) speech recognition of utterances of different languages corresponding to the main language codebook and additional codebooks from which one single multilingual codebook is generated that is used for the speech recognition process. According to this method the main language codebook is augmented by code vectors that are characteristic for one or more languages different from the main language, i.e. by code vectors that exhibit a significant distance to the closest code vector of the main language codebook in the N dimensional feature space. In particular, only a predetermined number of code vectors of the at least one additional codebook is added to the main language codebook and, thus, the demand for computational resources is kept reasonable. Economic management of the processor load and memory is particularly important in the context of embedded systems, for instance, navigation systems installed in vehicles.

Since the multilingual codebook comprises code vectors corresponding to a language different from the main language usually used by a user of a speech recognition and/or control means implementing speech recognition based on the codebook generated by the inventive method, utterances in that language different from the main language can reliably by recognized. Consider a situation in that the multilingual codebook generated by the inventive method is provided to a vehicle navigation system installed in an automobile manufactured for the German market. The main language is German. However, when the driver leaves Germany heading to France, for example, a speech input of a destination in France, say a French town, can be successful recognized, if the at least one additional codebook corresponds to French.

In order to further reduce the number of code vectors comprised in the multilingual codebook only code vectors of the at least one additional codebook are added that exhibit a distance to the closest neighbor of the main language codebook above a predetermined threshold. In particular, it may be preferred that a code vector of the at least one additional codebook and a code vector of the main language codebook are merged when their distance to each other lies below a predetermined threshold. i.e. they are replaced by a code vector that would have been estimated from the training samples of both the main language codebook and the additional codebook that resulted in the estimations of the code vectors that are merged. In addition, a code vector of one additional codebook and a code vector of another additional codebook might be merged when their distance to each other lies below a predetermined threshold and the merged code vector is added to the main language codebook to avoid the addition of very similar code vectors to the main language codebook.

According to an embodiment the main language codebook and/or the at least one additional codebook are generated based on utterances by a single or some particular users, i.e. speaker enrolment is employed for better performance of speech recognition. In this case, the code vectors of the at least one additional codebook correspond to utterances of a speaker in a language that is not his mother language. This might be particularly advantageous for the reliability of the speech recognition process, if the speaker/user is not very familiar with the foreign language he has to use in particular situations. Alternatively, the main language codebook and/or the at least one additional codebook might be generated on the basis of utterances of native model speakers.

In any case, for the generation of a codebook of one single particular language feature (characteristic) vectors comprising feature parameters (e.g., spectral envelope, pitch, formants, short-time power density, etc.) extracted from digitized speech signals and the codebook is generated by means of the feature vectors (code vectors). Some mapping of these feature vectors to verbal representations of the speech signals is usually employed for speech recognition processing.

The present invention also provides a method for speech recognition comprising the steps of providing a multilingual codebook generated by a method according to one of the preceding claims; detecting a speech input; and processing the speech input for speech recognition by means of the provided multilingual codebook. The speech recognition processing may make use of a Hidden Markov Model (HMM) thereby realizing speech reconnection in form of vector quantization. In particular, a different trained HMM is used for each language represented in the multilingual codebook.

Additional features and advantages of the present invention will be described with reference to the drawing. In the description, reference is made to the accompanying figure that is meant to illustrate the invention. It is understood that such an illustration does not represent the full scope of the invention, which is designed by the appended claims

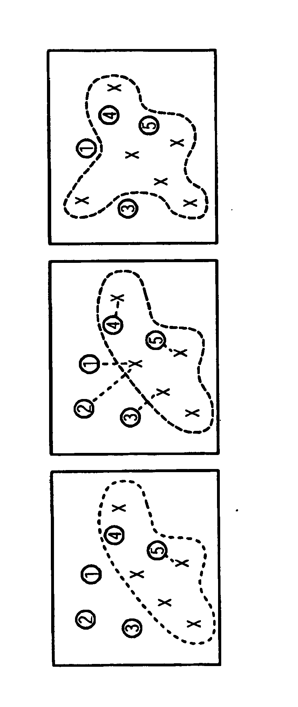

Figure 1 illustrates the generation of a multilingual codebook according to an example of the present invention.

An important feature of the herein claimed invention is a multilingual codebook generated from two or more codebooks each of which comprises code vectors of particular languages. One of the languages is denoted a main language, i.e. a language that is of particular importance, since, e.g., this language is usually used by a user of a speech recognition and/or control means incorporating the present invention. Consider, for instance, a navigation system comprising a speech input means and installed in a vehicle sold in Germany. Probably, the user usually speaks German and the speech recognition means shall be particularly able to reliable recognize German utterances. In this case, German is the main language.

A corresponding main language codebook comprises code vectors indicated by X's in Figure 1 (left-hand side). The main language codebook was generated by the LBG algorithm, for example, as known in the art. Preferably, and as it is also well-known the code vectors represent Gaussians within a Gaussian mixture model. Thereby, speech recognition in form of vector quantization employing an HMM recognizer trained for the German language and based on the main language codebook is provided for speech inputs in the German language.

According to the present example, a multilingual codebook is generated as indicated by the dashed contour of Figure 1 that represents the area in feature space covered by the Gaussians. For simplicity, Figure 1 shows additional code vectors (encircled numerals 1 - 5) of one additional codebook for a language different from the main language only. Generalization to multiple codebooks comprising corresponding code vectors is straightforward. Additional code vectors enumerated as 4 and 5 lie within the area indicated by the dashed contour. Code vectors 1, 2 and 3 of the additional codebook lie outside this area and, thus, represent sound patterns (features) that are typical for the language different from the main language but are not similar to any of the code vectors of the main language codebook corresponding to this main language.

According to the herein disclosed method distances of the code vectors of the additional codebook to the respective closest code vectors of the main language codebook are determined as indicated by the dashed connecting lines. In the example illustrated in Figure 1 additional code vectors 1 and 2 have the same closest neighbor of the main language codebook.

The distances between the additional code vectors 1-5 and the code vectors (Gaussians) X of the main language codebook, in principle, could be determined by distance measures known in the art, e.g., some Euclidean distance, the Mahalanobis distance or the Kullback-Leibler divergence. Alternatively, the distances can be determined by minimizing the gain in variance when a particular additional code vector is merged with different particular code vectors of the main language codebook, i.e. the respective code vectors, e.g., 1 and the closest one of the X's, are replaced by a code vector that would have been estimated from the training samples of both the main language codebook and the additional codebook that resulted in the particular estimations of the code vectors that are merged.

After the distances have been determined the code vector of the additional codebook that shows the largest distance to the respective closest code vector X of the main language codebook is added to the main language codebook. This code vector, which in the example shown in Figure 1 is code vector 2 of the additional codebook, would result in the largest vector quantization error when a speech input of the language corresponding to the additional codebook is to be recognized.

Thus, by including this vector in the iterated main language codebook the recognition result of a speech input of the language corresponding to the additional codebook is significantly improved. Further iterations resulting in the inclusion of further code vectors of the additional codebook in the main language codebook will further reduce vector quantization errors for utterances in the language corresponding to the additional codebook. In each iteration step the code vector of the additional code book is added to the multilingual codebook that exhibits the shortest distance to it's closest code vector neighbor of the main language codebook.

Code vectors of further additional codebooks representing other languages may also be included in the original main language codebook. By these iterations the main language codebook develops into a multilingual codebook. For each language an HMM speech recognizer is then trained based on the resulting multilingual codebook. Each HMM is trained with the corresponding language (code vectors of the corresponding language) only.

It is an important feature of the present invention that the resulting multilingual codebook, in principle, includes the entire original main language codebook (all code vectors X). Thus, any recognition result of an utterance in the language corresponding to the main language codebook based on the resulting multilingual codebook is as reliable as a recognition result of an utterance in that language based on the original main language codebook. Moreover, the Gaussians of the main language codebook are not altered at all with the possible exception that very close code vectors of additional codebooks and of the main language codebook might be merged if desired.

It is noted that usually there are code vectors of additional codebooks present that are very similar (close) to code vectors of the main language codebook. In the example shown in Figure 1 code vector 5 exhibits a small distance it's closest neighbor X. When a distance of a code vector of an additional codebook to the closest neighbor of the main language codebook or an already iterated multilingual codebook lies below some suitably chosen threshold the respective code vectors are merged in order to avoid redundancies caused by similar sounds of different languages. Thereby, the total number of code vectors can be kept relatively low.

For example, one may start from a main language codebook representing feature vectors for the German language. Then, additional codebooks for the English, French, Italian and Spanish languages are added and a multilingual codebook is generated as it is explained above. Each of the codebooks is, e.g., generated by means of the well-known LBG algorithm. The multilingual codebook may comprise some 1500 or 1800 Gaussians, for example. The influence of each of the additional codebooks can be readily weighted by the number of code vectors of each of the codebooks.

Experiments have proven that starting with a main language codebook for German comprising 1024 code vectors the generation of a multilingual codebook comprising the same 1024 code vectors for German and additional 400 code vectors for English, French, Italian and Spanish allows for satisfying recognition results for utterances in any of the mentioned languages. In particular, speech recognition of German utterances is not degraded with respect to the recognition of German utterances that is merely based on the main language codebook for German comprising the 1024 code vectors. In the named experiment a relatively small increase of computational costs and memory demand results in significantly improved multilingual speech recognition.

All previously discussed examples are not intended as limitations but serve as examples illustrating features and advantages of the invention. It is to be understood that some or all of the above described features can also be combined in different ways inasmuch as falling within the scope designed by the appended claims.

## Claims

1. Method for generating a multilingual codebook for speech recognition, comprising the steps of
providing a main language codebook;
providing at least one additional codebook corresponding to a language different from the main language;
generating a multilingual codebook from the main language codebook and the at least one additional codebook by adding a sub-set of code vectors of the at least one additional codebook to the main codebook based on distances between the code vectors of the at least one additional codebook to code vectors of the main language codebook ; determining distances between code vectors of the at least one additional codebook to code vectors of the main language codebook; and adding to the main language codebook at least one code vector of the at least one additional codebook that exhibits a predetermined distance above a predetermined threshold from the code vector of the main language codebook that is closest to this at least one code vector.

2. The method according to claim 1, wherein a code vector of the at least one additional codebook and a code vector of the main language codebook are merged when their distance to each other lies below a predetermined threshold.

3. The method according to one of the preceding claims, wherein a code vector of one additional codebook and a code vector of another additional codebook are merged when their distance to each other lies below a predetermined threshold and the merged code vector is added to the main language codebook.

4. The method according to one of the preceding claims, wherein the main language codebook and/or the at least one additional codebook are generated based on utterances by a particular user.

5. The method according to one of the preceding claims, wherein the code vectors of the codebooks are distributed according to a Gaussian density distribution.

6. The method according to one of the preceding claims, wherein the distances are determined based on the Mahalanobis distance or the Kullback-Leibler divergence.

7. Method for speech recognition, comprising
providing a multilingual codebook generated by a method according to one of the preceding claims;
detecting a speech input; and
processing the speech input for speech recognition by means of the provided multilingual codebook.

8. Method according to claim 7, wherein the processing of the speech input for speech recognition comprises speech recognition based on a Hidden Markov Model.

## Patentansprüche

1. Verfahren zum Erzeugen eines Mehrsprachen - Codebuchs zur Spracherkennung, das die Schritte umfasst:
Bereitstellen eine Hauptsprache - Codebuchs;
Bereitstellen zumindest eines zusätzlichen Codebuchs entsprechend einer Sprache, die von der Hauptsprache verschieden ist;
Erzeugen eines Mehrsprachen - Codebuchs aus dem Hauptsprache - Codebuch und dem zumindest einen zusätzlichen Codebuch durch Hinzufügen einer Teilmenge an Code - Vektoren des zumindest einen zusätzlichen Codebuchs zu dem Hauptsprache - Codebuch auf der Grundlage von Distanzen von den Code - Vektoren des zumindest einen zusätzlichen Codebuchs zu Code - Vektoren des Hauptsprache - Codebuchs;
Bestimmen von Distanzen von Code - Vektoren des zumindest einen zusätzlichen Codebuchs zu Code - Vektoren des Hauptsprache - Codebuchs; und
Hinzufügen von zumindest einem Code - Vektor des zumindest einen zusätzlichen Codebuchs, der eine vorbestimmte Distanz oberhalb einer vorbestimmte Schwelle zu dem Code - Vektor des Hauptsprache - Codebuchs aufweist, der diesem zumindest einen Code - Vektor am nächsten ist, zu dem Hauptsprache - Codebuch.

2. Das Verfahren gemäß Anspruch 1, in dem ein Code - Vektor des zumindest einen zusätzlichen Codebuchs und ein Code - Vektor des Hauptsprache - Codebuchs vereinigt werden, wenn ihre Distanz zueinander unterhalb einer vorbestimmten Schwelle liegt.

3. Das Verfahren gemäß einem der vorhergehenden Ansprüche, in dem ein Code - Vektor eines zusätzlichen Code - Buchs und ein Code - Vektor eines anderen zusätzlichen Code - Buchs vereinigt werden, wenn ihre Distanz zueinander unterhalb einer vorbestimmten Schwelle liegt, und der vereinigte Code - Vektor dem Hauptsprache - Codebuch hinzugefügt wird.

4. Das Verfahren gemäß einem der vorhergehenden Ansprüche, in dem das Hauptsprache - Codebuch und/oder das zumindest eine zusätzliche Codebuch auf der Grundlage von Äußerungen eines bestimmten Nutzers erzeugt werden.

5. Das Verfahren gemäß einem der vorhergehenden Ansprüche, in dem die Code - Vektoren der Code - Bücher gemäß einer Gauss - Dichteverteilung verteilt sind.

6. Das Verfahren gemäß einem der vorhergehenden Ansprüche, in dem die Distanzen auf der Grundlage der Mahalanobis - Distanz oder der Kullback - Leibler - Distanz bestimmt werden.

7. Verfahren zur Spracherkennung, das umfasst
Bereitstellen eines Mehrsprachen - Codebuchs, das durch ein Verfahren gemäß einem der vorhergehenden Ansprüche erzeugt wird;
Detektieren einer Spracheingabe; und
Verarbeiten der Spracheingabe zur Spracherkennung mithilfe des bereitgestellten Mehrsprachen - Codebuchs.

8. Verfahren gemäß Anspruch 7, in dem das Verarbeiten der Spracheingabe zur Spracherkennung eine Spracherkennung auf der Grundlage eines Hidden - Markov - Modells umfasst.

## Revendications

1. Procédé pour générer un livre de codes multilingue pour reconnaissance de la parole, comprenant les étapes consistant à
fournir un livre de codes d'une langue principale ; fournir au moins un livre de codes supplémentaire correspondant à une langue différente de la langue principale ;
générer un livre de codes multilingue à partir du livre de codes de la langue principale et de l'au moins un livre de codes supplémentaire en ajoutant un sous-ensemble de vecteurs de codes de l'au moins un livre de codes supplémentaire au livre de codes principal, sur la base des distances entre les vecteurs de codes de l'au moins un livre de codes supplémentaire et les vecteurs de codes du livre de codes de la langue principale ;
déterminer les distances entre les vecteurs de codes de l'au moins un livre de codes supplémentaire et les vecteurs de codes du livre de codes de la langue principale ; et
ajouter au livre de codes de la langue principale au moins un vecteur de codes de l'au moins un livre de codes supplémentaire présentant une distance prédéterminée supérieure à un seuil prédéterminé par rapport au livre de codes de la langue principale la plus proche de cet au moins un vecteur de codes.

2. Procédé selon la revendication 1, dans lequel un vecteur de codes de l'au moins un livre de codes supplémentaire et un vecteur de codes du livre de codes de la langue principale sont fusionnés lorsque leur distance mutuelle est inférieure à un seuil prédéterminé.

3. Procédé selon l'une des revendications précédentes, dans lequel un vecteur de codes d'un livre
de codes supplémentaire et un vecteur de codes d'un autre livre de codes supplémentaire sont fusionnés lorsque leur distance mutuelle est inférieure à un seuil prédéterminé et le vecteur de codes fusionné est ajouté au livre de codes de la langue principale.

4. Procédé selon l'une des revendications précédentes, dans lequel le livre de codes de la langue principale et/ou l'au moins un livre de codes supplémentaire sont générés en se basant sur les énoncés d'un utilisateur particulier.

5. Procédé selon l'une des revendications précédentes, dans lequel les vecteurs de codes des livres de codes sont distribués selon une distribution de densité gaussienne.

6. Procédé selon l'une des revendications précédentes, dans lequel les distances sont déterminées en se basant sur la distance de Mahalanobis ou sur la divergence de Kullback-Leibler.

7. Procédé de reconnaissance de la parole comprenant
la fourniture d'un livre de codes multilingue généré par un procédé selon l'une des revendications précédentes ;
la détection d'une entrée de parole ; et
le traitement de l'entrée de parole pour la reconnaissance de la parole au moyen du livre de codes multilingue fourni.

8. Procédé selon la revendication 7, dans lequel le traitement de l'entrée de parole pour la reconnaissance de la parole comprend une reconnaissance de la parole basée sur un modèle de Markov caché.
